# EUROPEAN PATENT SPECIFICATION

(11) **EP 4 266 111 B1**
(45) Date of publication and mention of the grant of the patent: **06.08.2025**
(21) Application number: 22168925.0
(22) Date of filing: 20.04.2022
(51) Int. Cl.: G02B 27/00

(54) **OPTICAL DETECTION SYSTEM FOR A MOTOR VEHICLE**
SYSTEM ZUR OPTISCHEN ERFASSUNG FÜR EIN KRAFTFAHRZEUG
SYSTÈME DE DÉTECTION OPTIQUE POUR UN VÉHICULE À MOTEUR

(43) Date of publication of application: 25.10.2023
(73) Proprietor: Valeo Systèmes d'Essuyage, 78322 Le Mesnil Saint Denis (FR)
(72) Inventor: CHABANNES, Benjamin, 63500 Issoire (FR); BUTE, Radu-George, 74321 Bietigheim-Bissingen (DE); KOLLER, Michael, 74321 Bietigheim-Bissingen (DE)
(74) Representative: Valeo Visibility

(56) References cited:
- DE-A1- 102018 216 123
- DE-A1- 102021 001 922
- US-A1- 2019 154 800

## Description

### TECHNICAL FIELD

The present invention relates to the field of optical detection systems intended for a motor vehicle. More particularly, the present invention relates to cleaning and cooling of such optical detection systems.

### STATE OF THE ART

Motor vehicles are equipped with detection systems to collect information related to the environment of the motor vehicle, in particular in order to provide the driver of the motor vehicle with assistance in the driving and/or the maneuvering of the motor vehicle. For instance, semi- and fully-autonomous vehicles typically include a variety of sensors. Some sensors detect internal states of the vehicle, for example, wheel speed, wheel orientation, and engine and transmission variables. Some sensors detect the position or orientation of the vehicle, for example, global positioning system (GPS) sensors; accelerometers such as piezo-electric or microelectromechanical systems (MEMS); gyroscopes such as rate, ring laser, or fiber-optic gyroscopes; inertial measurements units (IMU); and magnetometers. Some sensors detect the external world, for example, radar sensors, scanning laser range finders, light detection and ranging (LIDAR) devices, and image processing sensors such as cameras. A LIDAR device detects distances to objects by emitting laser pulses and measuring the time of flight for the pulse to travel to the object and back.

In addition, autonomous vehicle sensors often require cooling to prevent damage due to overheating conditions. The sensors are often mounted in sealed encasements, which prevent the flow of air and limit external effects from the environment; however, such sealed configurations may exacerbate heat issues in the mounted sensors. Since heat is introduced into the mounted sensors either due to environmental situations (e.g., hot weather conditions) or the operations of the sensors themselves, a cooling system to force better environmental conditions is necessary. Conventionally, a cooling system may ideally be tied directly to the cooling system of the vehicle itself to provide cooling system for the sensors.

Further, the optical detection systems of the autonomous vehicles may be exposed to fouling as from dirty water, dust or other types of sprays. Such fouling can form an obstacle to the emission and the reception of the e.g. laser, infrared, or radar beams, and thus can disrupt the operation of the detection system, even make this operation impossible. Ultimately resulting in a deterioration in the efficacy of the detection system or possibly rendering it unusable, or providing an undesirable appearance. Accordingly, it is desirable to periodically clean these optical surfaces of the detection systems to reduce or eliminate the build-up of obstructive debris.

Conventionally, two separate systems/devices are used to perform cooling of the sensors of the optical detection system and cleaning of the sensors of the optical detection systems, which is costly and requires more space. It is desirable to devise an integrated system/device, which can perform both cleaning and cooling of the sensors of the optical detection system.

The patent application publications DE 10 2018 216 123 A1, DE 10 2021 001 922 A1, and US 2019/0154800 A1 illustrate optical detection systems as known in the prior art.

### SUMMARY OF THE INVENTION

An object of the present invention is to alleviate at least some of the problems raised by the prior arts. To be more precise, an object of the present disclosure is to provide an optical detection system in which a cleaning device performs both cleaning and cooling of sensor(s) of the optical detection system, such that the use of an additional cooling system or use of additional components can be avoided.

Another object of the present invention is to provide an optical detection system, which is compact, and can be adaptable and integrated to any type of motor vehicle.

In order to address the above described objects, the present invention provides an optical detection system for a motor vehicle according to claim 1, comprising, *inter alia:* a detecting device comprising a sensor having an optical surface, a heat dissipating means, and a cleaning device arranged in proximity to the optical surface for directing a flow of air onto the optical surface to remove a substance from the optical surface. The cleaning device comprises an air guiding part for guiding the flow of air from a supply source to the optical surface.

Further, the flow of air is guided from the supply source to the optical surface via the heat dissipating means so as to transfer heat from the heat-dissipating means to the flow of air. The heat from the heat-dissipating means is thus transferred to the flow of air. This will increase the temperature of the flow of air, and the resulting heated air may be blown onto the optical surface, hence enhancing the cleaning effect of the optical surface of the optical detection system. Advantageously, with the optical detection system of the present invention, both the cleaning and cooling functions can be performed with limited components, and thereby resulting in reducing the size and cost of the optical detection system compared to the existing optical detection systems.

Further, the optical detection system of the proposed invention is intended to reduce operation and maintenance costs. Additionally, the present invention enables simple assembly as well as easy replacement of any defective components of the optical detection system. Hence, the present invention aims to simplify the optical detection system while maintaining its performance.

According to one characteristic of the present invention, the air guiding part includes a fan, an input air nozzle positioned at an upstream end of the fan and an output air nozzle positioned at a downstream end of the fan.

This arrangement of the components will allow maintaining the flow of air from the input air nozzle to the output air nozzle.

According to the present invention, the heat dissipation means is arranged at the upstream end of the fan, and the thermal transfer from the heat dissipation means to the flow of air is performed at the upstream end of the fan. With this arrangement, the heat transfer from the heat dissipation means to the flow of air is performed before the flow of air intakes the input air nozzle. Hence, the temperature of the flow of air entering the input air nozzle may be higher compared to the temperature of the flow of air at the supply source, and thereby heated air may be used to remove the substance from the optical surface. Therefore, the efficiency of cleaning the optical surface may be enhanced, in particular, when the substance to be removed are liquid droplets, for example.

According to one characteristic of the present invention, the heat dissipation means is positioned on a rear face of the sensor. As previously discussed, when the heat dissipation means is positioned on the rear face of the sensor, the heat transfer from the heat dissipation means to the flow of air is performed before the flow of air intakes the input air nozzle. This arrangement of the heat dissipation means on the sensor facilitates both the cleaning of the optical surface of the sensor and cooling of the optical detection system.

According to one characteristic of the present invention, the heat dissipation means is arranged within the output air nozzle. In this configuration, the heat dissipation means may be adapted to be arranged within the output air nozzle. For instance, in this configuration, the output air nozzle may be arranged to position on the top of a sensor housing and thereby the heat dissipation means may be arranged on the top of the sensor housing. With this arrangement, the temperature of the flow of air entering the output air nozzle may be lesser than the temperature of the flow of air exiting the output air nozzle. Further, the present invention provides greater flexibility with regards to the position of the heat dissipation means, while obtaining substantially the same cleaning and cooling performance.

According to one characteristic of the present invention, the heat dissipating means comprises a plurality of fins.

According to one characteristic of the present invention, the substance is at least one of: water droplets, dust and other obstacles.

According to one characteristic of the present invention, the present invention is also related to a motor vehicle equipped with the optical detection system as has just been presented.

Further advantages, features and details of the invention will be apparent from the following description of preferred embodiments of the invention and from the drawings.

### BRIEF DESCRIPTION OF THE INVENTION

To complete the description and to provide a better understanding of the invention, a set of drawings is provided. Said drawings form an integral part of the description and illustrate an embodiment of the invention, which should not be construed as restricting the scope of the invention, but only as an example of how the invention can be carried out. The drawings comprise the following characteristics.
Fig.1a shows a side view of an optical detection system for a motor vehicle, according to an embodiment of the present invention.
Fig.1b shows a perspective view of an optical detection system for a motor vehicle, according to an embodiment of the present invention.
Fig.2a shows a front view of an optical detection system of a motor vehicle, according to an example not encompassed by the wording of the claims.
Fig.2b shows a perspective view of an optical detection system of a motor vehicle, according to an example not encompassed by the wording of the claims.
Fig.3 shows a perspective view of an exemplary motor vehicle equipped with an optical detection system, according to an embodiment of the present invention.

### DETAILED DESCRIPTION OF THE INVENTION

The description set forth below in connection with the appended drawings is intended as a description of various embodiments of the disclosed subject matter and is not necessarily intended to represent the only embodiment(s).In certain instances, the description includes specific details for the purpose of providing an understanding of the disclosed subject matter. However, it will be apparent to those skilled in the art that embodiments may be practiced without these specific details. In some instances, well known structures and components may be shown in block diagram form in order to avoid obscuring the concepts of the disclosed subject matter.

Reference throughout the specification to "one embodiment" or "an embodiment" means that a particular feature, structure, characteristic, operation, or function described in connection with an embodiment is included in at least one embodiment of the disclosed subject matter. Thus, any appearance of the phrases "in one embodiment" or " in an embodiment" in the specification is not necessarily referring to the same embodiment. Further, the particular features, structures, characteristics, operations, or functions may be combined in any suitable manner in one or more embodiments. Further, it is intended that embodiments of the disclosed subject matter can and do cover modifications and variations of the described embodiments.

It should also be noted that, in the following description, the designations "upstream" and "downstream" refer to the direction of flow of the fluids whether they are cleaning or drying fluids, in the cleaning device according to the invention. Thus, the designation "upstream" refers to the side of the device according to the invention through which these fluids are admitted into it, and the designation "downstream" refers to the side of the device according to the invention through which the fluids are dispensed out of it, in particular toward an optical surface of a detection system of a motor vehicle.

Motor vehicles are equipped with detection systems to collect information on the environment of the motor vehicle, in particular in order to provide the driver with assistance in the driving and/or the maneuvering of this vehicle. It will be appreciated that, without departing from the scope of the invention, the motor vehicle may include a number of sensors, devices, and/or systems that are capable of assisting in driving operations. Examples of the various sensors and systems may include, but are not limited to, one or more of cameras (e.g., independent, stereo, combined image, etc.), infrared (IR) sensors, radio frequency (RF) sensors, ultrasonic sensors (e.g., transducers, transceivers, etc.), RADAR sensors (e.g., object-detection sensors and/or systems), LIDAR systems, odometry sensors and/or devices (e.g., encoders, etc.), orientation sensors (e.g., accelerometers, gyroscopes, magnetometer, etc.), navigation sensors and systems (e.g., GPS, etc.), and other ranging, imaging, and/or object-detecting sensors. The sensors may be disposed in an interior space of the vehicle and/or on an outside of the vehicle. In some embodiments, the sensors and systems may be disposed in one or more portions of a vehicle (e.g., the frame, a body panel, a compartment, etc.).

For instance, sensors such as LIDAR would generate more heat during the operation. It is necessary to prevent damage due to overheating conditions. The sensors may often be mounted in sealed encasements, which prevent the flow of air and limit external effects from the environment; however, such sealed conditions may exacerbate heat issues in the mounted sensors. Further, the optical detection systems of the autonomous vehicles may be exposed to the fouling as from dirty water, dust or other types of sprays. Accordingly, it is desirable to periodically clean the optical surface of the detection system to reduce or eliminate the build-up of obstructive debris for proper operation of the optical detection system.

The present invention provides an optical detection system, which is compact and can be adapted to perform both the cleaning of an optical face of the optical detection and cooling of the optical detection system, without using an additional cooling system like conventional optical detection systems.

Referring now to the drawings, wherein like reference numerals designate identical or corresponding parts throughout the several views. Hereinafter, exemplary embodiments of the present disclosure will be described in detail based on the drawings.

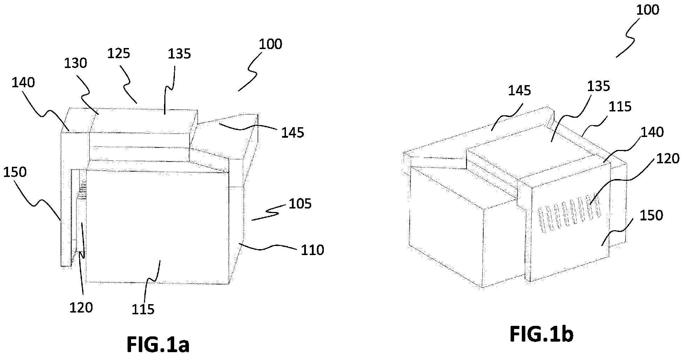

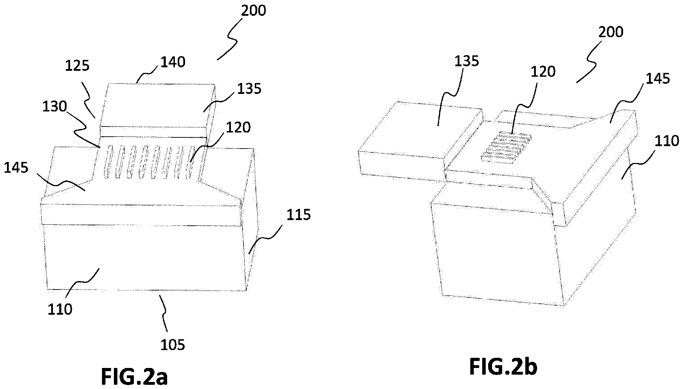

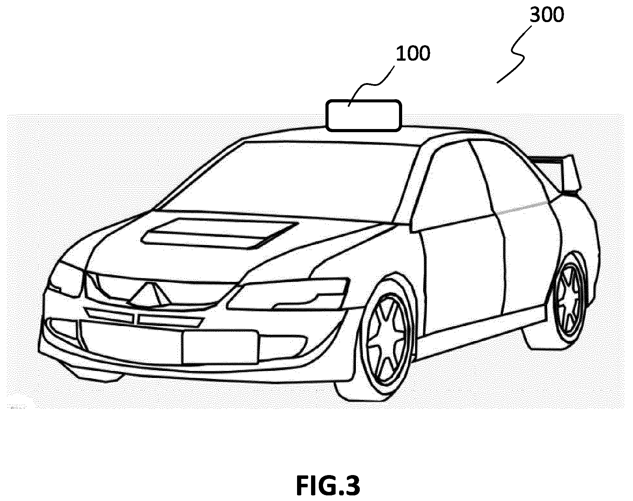

Fig.1a shows a side view of an optical detection system of a motor vehicle, according to an embodiment of the present invention. Fig.1b shows a perspective view of an optical detection system of a motor vehicle, according to an embodiment of the present invention. Fig.2a shows a front view of an optical detection system of a motor vehicle, according to an embodiment of the present invention. Fig.2b shows a perspective view of an optical detection system of a motor vehicle, according to an embodiment of the present invention. Fig.3 shows a perspective view of an exemplary motor vehicle equipped with an optical detection system, according to an embodiment of the present invention.

Referring now to the illustrations, Fig.1a and Fig.1b illustrate an optical detection system according to an embodiment of the present invention. The optical detection system 100 for a motor vehicle comprises a detecting device 105 comprising a sensor having an optical surface 110, a sensor housing 115 in which the sensor is accommodated, and a heat dissipating means 120. In particular, the sensor is a LIDAR sensor, which generates greater amounts of heat during its operation, which would have a greater effect on the interior operating environment of the optical detection system 100. Although the embodiments of the present invention are discussed by considering an example of a LIDAR sensor, it is understood to a person skilled in the art that any type of sensor that suits the requirements can be employed. The LIDAR sensor is used to detect objects located in the direction of travel of the vehicle.

The optical detection system 100 according to the embodiment further comprises a cleaning device 125 arranged in proximity to the optical surface 110 for directing a flow of air onto the optical surface 110 to remove a substance from the optical surface 110. For instance, the cleaning device 125 may be arranged on a roof region of the sensor housing 115 of the optical detection system 100. The components of the cleaning device 125, which will be explained in more detail below, are preferably formed as attachments to the housing 115, so that a simple exchange or assembly and/or disassembly of the components of the cleaning device 125 is enabled.

According to the embodiment of the present invention, the cleaning device 125 comprises an air guiding part 130 for guiding the flow of air from a supply source (not shown in the Figures) to the optical surface 110 of the sensor. Further, as can be seen from Fig.1a and Fig.1b, the air guiding part 130 includes a fan 135, an input air nozzle 140 positioned at an upstream end of the fan 135 and an output air nozzle 145 positioned at a downstream end of the fan 130. The output air nozzle 145 may be arranged to direct the flow of air over the optical surface 110 of the sensor. Optionally, the optical detection system 100 further comprises an air duct 150 arranged between the supply source and the input air nozzle 140 such that air duct 150 may extend over a rear face of the sensor housing 115. For instance, the air duct 150, the input air nozzle 140 and the output air nozzle 145 may be made from plastic material. Further, the air duct 150, the input air nozzle 140, the fan 135, and the output air nozzle 145 extend over the rear face and a top face of the sensor housing 115, as can be seen from Fig.1a and Fig.1b. In this embodiment, the heat dissipation means 120, for example, a plurality of fins or cooling ribs may be arranged on the rear face of the sensor housing 115. That is to say, the heat dissipation means 120 may be arranged at the upstream end of the fan 135. With this arrangement, the thermal transfer from the heat dissipation means 120 to the flow of air may be performed at the upstream end of the fan 135.

During operation, the fan 135 may be operated to draw the flow of air from the supply source and guided towards the output air nozzle 145 via the air duct 150, the input air nozzle 140 and the fan 135. The flow of air, which exits the output air nozzle 145, is directed over the optical surface 110 to remove the substance from the optical surface 110. For example, the substance is at least one of: water droplets, dust and other obstacles. The flow of air that is guided from the supply source to the optical surface 110 is passed over the heat dissipating means 120 so as to transfer heat from the heat-dissipating means 120 to the flow of air. It is to be noted that the temperature of the flow of air that is entering the input air nozzle 140 may be different from the temperature of the flow of air at the supply source, as the generated heat may be transferred to the flow of air before the air enters the air input nozzle 140. Hence, it is understood that the flow of air with increased temperature may be directed over the optical surface 110 and thereby improving the performance of the cleaning operation. Thus, in accordance with the first embodiment of the optical detection system, the flow of air is used to perform both the cleaning of the optical surface 110 and cooling of the optical detection system 100, without employing an additional cooling systems like in the conventional optical detection systems.

Referring now to the drawings, Fig.2a and Fig.2b illustrates an optical detection system 200 according to an example not encompassed by the wording of the claims. It is to be noted that an optical detection system 100 according to the embodiment and an optical detection system 200 according to the example differs in the configuration. However, it is understood to a person skilled in the art that the performance of the optical detection system 100 of the embodiment and the optical detection system 200 of the example substantially remains the same.

Similar to the embodiment, the optical detection system 200 of the example comprises a detecting device 105 comprising a sensor having an optical surface 110, a heat dissipating means 120 and a cleaning device 125 arranged in proximity to the optical surface 110 for directing a flow of air onto the optical surface 110 to remove a substance from the optical surface 110. Likewise the first embodiment, the optical detection system 200 of the cleaning device 125 of the second embodiment also includes an air guiding part 130 for guiding the flow of air from a supply source (not shown in the figures) to the optical surface 110 of the sensor. The air guiding part 130 includes a fan 135, an input air nozzle 140 positioned at upstream end of the fan 135, and an output air nozzle 145 positioned at a downstream end of the fan 135. The output air nozzle 145 may be arranged to direct the flow of air over the optical surface 110 of the sensor. Further, the heat dissipating means 120 may be arranged within the output air nozzle 145, as can be seen from Fig.2a and Fig.2b.

As can be seen from the Fig.1a, Fig.1B, Fig.2a and Fig.2b, the arrangement of the heat dissipating means 120 in this example is different from the arrangement of the heat dissipating means 120 in the embodiment. In this example, the heat dissipating means 120 may be arranged on the top face of the sensor housing 115 as shown in Fig.2a and Fig.2b. With this arrangement, the thermal transfer from the heat dissipation means 120 to the flow of air may be performed at the downstream end of the fan 135. During operation, the fan 135 may be operated to draw the flow of air from the supply source and guided towards the output air nozzle 145. The flow of air, which exits the output air nozzle 145, is directed over the optical surface 110 to remove the substance from the optical surface 110. The flow of air that is guided from the supply source to the optical surface 110 is passed over the heat dissipating means 120 so as to transfer heat from the heat-dissipating means 120 to the flow of air. It is to be noted that the temperature of the flow of air that is entering the output air nozzle 145 may be different from the temperature of the flow of air that is exiting the output air nozzle 145, as the generated heat may be transferred to the flow of air before the flow of air exits the output air nozzle 145. Hence, it is understood that the flow of air with increased temperature may be directed over the optical surface 110 and thereby improving the performance of the cleaning operation. Thus, in accordance with the second embodiment of the optical detection system 200, the flow of air is used to perform both the cleaning of the optical surface 110 and cooling of the optical detection system 200, without employing an additional cooling system like the conventional optical detection systems.

According to one characteristic of the present invention, the present invention is also related to a motor vehicle equipped with the optical detection system as has just been presented. Fig.3 is a front view of a motor vehicle 300, whose rooftop is equipped with an optical detection system 100 of the embodiment or an optical detection system 200 of the second embodiment of the invention. Although the rooftop of the motor vehicle 300 shown in the Fig.3 is provided with the detection system 100, 200, it is understood to a person skilled in the art that the detection system 100, 200 can be provided on other faces of the vehicle 300. For instance, the detection system 100, 200 may be provided on at least one of: a vehicle front, vehicle aft or rear, at least one vehicle side, a vehicle undercarriage, and a vehicle interior. Further, in Fig.3, although shown in the form of a car, it should be appreciated that the vehicle 300 described herein may include any conveyance or model of a conveyance, where the conveyance was designed for the purpose of moving one or more tangible objects, such as people, animals, cargo, and the like. The term "vehicle" does not require that a conveyance moves or is capable of movement. Typical vehicles may include but are in no way limited to cars, trucks, motorcycles, buses, automobiles, trains, railed conveyances, boats, ships, marine conveyances, submarine conveyances, airplanes, space craft, flying machines, human-powered conveyances, and the like.

The invention being thus described, it will be obvious that the same may be varied in many ways. Such variations are not to be regarded as a departure from the scope of the invention as defined by the claims.

## Claims

1. An optical detection system (100, 200) for a motor vehicle (300), comprising:
a detecting device (105) comprising a sensor having an optical surface (110), and a heat dissipating means (120), and
a cleaning device (125) arranged in proximity to the optical surface (110) for directing a flow of air onto the optical surface (110) to remove a substance from the optical surface (110), wherein the cleaning device (125) comprises an air guiding part (130) for guiding the flow of air from a supply source to the optical surface (110), the flow of air being guided from the supply source to the optical surface (110) via the heat dissipating means (120) so as to transfer heat from the heat-dissipating means (120) to the flow of air, wherein the air guiding part (130) includes a fan (135),
**characterized in that** the heat dissipation means (120) is arranged at the upstream end of the fan (135), and the thermal transfer from the heat dissipation means (120) to the flow of air is performed at the upstream end of the fan (135).

2. The optical detection system (100,200) as claimed in claim 1, wherein the air guiding part (130) includes an input air nozzle (140) positioned at an upstream end of the fan (135) and an output air nozzle (145) positioned at a downstream end of the fan (135).

3. The optical detection system (100) as claimed in any one of the preceding claims, wherein the heat dissipation means (120) is positioned on a rear face of the sensor.

4. The optical detection system (100, 200) as claimed in any one of the preceding claims, wherein the heat dissipating means (120) comprises a plurality of fins.

5. The optical detection system as claimed in claim 1, wherein the substance is at least one of: water droplets, dust and other obstacles.

6. A motor vehicle (300) equipped with the optical detection system (100,200) as claimed in any one of claims 1 to 5.

## Patentansprüche

1. Optisches Detektionssystem (100, 200) für ein Kraftfahrzeug (300), das Folgendes umfasst:
eine Detektionsvorrichtung (105), die einen Sensor mit einer optischen Oberfläche (110) und ein Wärmeableitungsmittel (120) umfasst, und
eine Reinigungsvorrichtung (125), die in der Nähe der optischen Oberfläche (110) angeordnet ist, um einen Luftstrom auf die optische Oberfläche (110) zu richten, um eine Substanz von der optischen Oberfläche (110) zu entfernen, wobei die Reinigungsvorrichtung (125) ein Luftleitteil (130) zum Leiten des Luftstroms von einer Zufuhrquelle zu der optischen Oberfläche (110) umfasst, wobei der Luftstrom von der Zufuhrquelle zu der optischen Oberfläche (110) über das Wärmeableitungsmittel (120) geleitet wird, um Wärme von dem Wärmeableitungsmittel (120) auf den Luftstrom zu übertragen, wobei das Luftleitteil (130) ein Gebläse (135) umfasst,
**dadurch gekennzeichnet, dass** das Wärmeableitungsmittel (120) am stromaufwärtigen Ende des Gebläses (135) angeordnet ist und die Wärmeübertragung von dem Wärmeableitungsmittel (120) auf den Luftstrom am stromaufwärtigen Ende des Gebläses (135) durchgeführt wird.

2. Optisches Detektionssystem (100, 200) nach Anspruch 1, wobei das Luftleitteil (130) eine Eingangsluftdüse (140), die an einem stromaufwärtigen Ende des Gebläses (135) positioniert ist, und eine Ausgangsluftdüse (145), die an einem stromabwärtigen Ende des Gebläses (135) positioniert ist, umfasst.

3. Optisches Detektionssystem (100) nach einem der vorhergehenden Ansprüche, wobei das Wärmeableitungsmittel (120) auf einer Rückseite des Sensors positioniert ist.

4. Optisches Detektionssystem (100, 200) nach einem der vorhergehenden Ansprüche, wobei das Wärmeableitungsmittel (120) mehrere Rippen umfasst.

5. Optisches Detektionssystem nach Anspruch 1, wobei die Substanz mindestens eines von Folgendem ist: Wassertröpfchen, Staub und andere Hindernisse.

6. Kraftfahrzeug (300), das mit dem optischen Detektionssystem (100, 200) nach einem der Ansprüche 1 bis 5 ausgestattet ist.

## Revendications

1. Système de détection optique (100, 200) pour un véhicule à moteur (300), comprenant :
un dispositif de détection (105) comprenant un capteur présentant une surface optique (110) et un moyen de dissipation de chaleur (120), et
un dispositif de nettoyage (125) disposé à proximité de la surface optique (110) pour diriger un flux d'air sur la surface optique (110) afin d'éliminer une substance de la surface optique (110), le dispositif de nettoyage (125) comprenant une partie de guidage d'air (130) pour guider le flux d'air d'une source d'alimentation à la surface optique (110), le flux d'air étant guidé de la source d'alimentation à la surface optique (110) via le moyen de dissipation de chaleur (120) de manière à transférer la chaleur du moyen de dissipation de chaleur (120) au flux d'air, la partie de guidage d'air (130) comprenant un ventilateur (135),
**caractérisé en ce que** le moyen de dissipation de chaleur (120) est disposé à l'extrémité amont du ventilateur (135), et le transfert thermique du moyen de dissipation de chaleur (120) au flux d'air est effectué à l'extrémité amont du ventilateur (135).

2. Système de détection optique (100, 200) selon la revendication 1, dans lequel la partie de guidage d'air (130) comprend une buse d'air d'entrée (140) positionnée à une extrémité amont du ventilateur (135) et une buse d'air de sortie (145) positionnée à une extrémité aval du ventilateur (135).

3. Système de détection optique (100) selon l'une quelconque des revendications précédentes, dans lequel le moyen de dissipation de chaleur (120) est positionné sur une face arrière du capteur.

4. Système de détection optique (100, 200) selon l'une quelconque des revendications précédentes, dans lequel le moyen de dissipation de chaleur (120) comprend une pluralité d'ailettes.

5. Système de détection optique selon la revendication 1, dans lequel la substance est au moins l'un des éléments suivants : gouttelettes d'eau, poussière et autres obstacles.

6. Véhicule à moteur (300) équipé du système de détection optique (100, 200) selon l'une quelconque des revendications 1 à 5.
